# EUROPÄISCHE PATENTSCHRIFT

(11) **EP 1 579 550 B1**
(45) Veröffentlichungstag und Bekanntmachung des Hinweises auf die Patenterteilung: **05.04.2017**
(21) Anmeldenummer: 03740048.8
(22) Anmeldetag: 30.05.2003
(51) Int. Cl.: H02K 3/52, H02K 5/22

(54) **VERSCHALTUNGSELEMENT FÜR EINE WICKLUNG EINER ELEKTRISCHEN MASCHINE**
CONNECTING ELEMENT FOR A WINDING OF AN ELECTRIC MACHINE
ÉLÉMENT DE CONNEXION POUR L'ENROULEMENT D'UNE MACHINE ÉLECTRIQUE

(30) Priorität: 27.12.2002 DE 10261611
(43) Veröffentlichungstag der Anmeldung: 28.09.2005
(73) Patentinhaber: ROBERT BOSCH GMBH, 70442 Stuttgart (DE)
(72) Erfinder: KLAPPENBACH, Christoph, 77833 Ottersweier-Unzhurst (DE); MAURER, Erik, 77830 Buehlertal (DE)
(86) Internationale Anmeldenummer: PCT/DE2003/001768
(87) Internationale Veröffentlichungsnummer: WO 2004/062066

(56) Entgegenhaltungen:
- EP-A- 0 777 312
- WO-A-02/061919
- US-A- 3 979 615
- US-A- 4 315 179

## Beschreibung

### Stand der Technik

Die Erfindung geht aus von einem Verschaltungselement für eine aus Spulen zusammengesetzte, mehrsträngige Wicklung einer elektrischen Maschine, insbesondere eines bürstenlosen Kleinmotors, nach dem Oberbegriff des Anspruchs 1.

Bei einem bekannten Verschaltungselement dieser Art (EP 1 062 720 B1) ist der Träger aus Isoliermaterial eine Trägerplatte, welche mittels einer Nabe zusammen mit einem als Blechpaket ausgeführten, die Wicklung tragenden Statorkörper auf einem Lagertragrohr befestigt ist, das seinerseits an einem Motorflansch befestigt ist. Die elektrischen Leiterstreifen zum Herstellen von Schaltverbindungen zwischen den Spulen sind als konzentrisch zu der Nabe auf der Trägerplatte befestigte Stromschienen ausgebildet, die als Stanzteilen hergestellt sind. Dabei ist eine erste Stromschiene mit von der Stromschiene abgewinkelte Laschen zur Bildung eines Sternpunktes mit den Spulenenden aller Wicklungsstränge verbunden. Drei weitere Stromschienen sind um die erste Stromschiene konzentrisch auf der Trägerplatte befestigt, wobei deren Laschen zum Verbinden mit den Spulenanfängen angeordnet sind. Um Kreuzungspunkten zwischen den konzentrischen Schienen und den davon abstehenden Laschen zu vermeiden, sind die Laschen der zweiten Stromschiene mittels vertieft angeordneter Führungen in der Trägerplatte unter die dritte Stromschiene und die vierte Stromschiene und die Laschen der dritten Stromschiene mittels vertieft angeordneter Führungen unter die vierte Stromschiene hindurchgeführt. Um den Verschnitt bei der Herstellung der aus Stanzmaterial bestehenden Stromschienen in Grenzen zu halten, wird die erste und die dritte Stromschiene in einem ersten Stanzwerkzeug und die zweite und die vierte Stromschiene in einem zweiten Stanzwerkzeug in je einem Stanzvorgang hergestellt, wobei die zweite, dritte und vierte Stromschiene mit je einer Verbindungslasche für Anschlusslitzen versehen wird.

Die EP 0 777 312 A2 zeigt einen Stator eines Elektromotors, bei dem eine Verschaltungsanordnung zur Verbindung der einzelnen Statorspulen ein Isolierteil aufweist. Im Isolierteil sind nutenförmige Kammern ausgebildet, in denen die elektrische Verbindungsleiter zwischen den Drahtenden der Statorwicklungen aufgenommen sind.

Mit der US 4,315,179 A ist eine elektrische Maschine bekannt geworden, bei der die einzelnen Statorspulen mittels ringsegmentförmigen Verbindungsleitern verbunden sind, die mittels Halteklammern am Stator befestigt sind.

Die elektrische Maschine gemäß der WO 02/061919 A2 weist einen Verschaltering für eine Ständerwicklung auf, mittels dessen die elektrischen Anschlüsse an einem radial innen liegenden Bereich radial nach außen geführt werden.

Die US 3,979,615 A zeigt einen Elektromotor, bei dem ein einstückiges Verbindungsbauteil axial konzentrisch zu einem Stator angeordnet ist. Das Verbindungsbauteil weist Kontaktvorrichtungen auf, bei dem die Spulenenden des Stators mit Anschlüssen der Motorstromversorgung verbunden werden.

### Vorteile der Erfindung

Das erfindungsgemäße Verschaltungselement mit den Merkmalen des Anspruchs 1 hat den Vorteil, dass durch die Verwendung von gebogenen Drähten für die elektrischen Leiterstreifen eine drastische Reduzierung der metallischen Werkstoffkosten für das Verschaltungselement erzielt wird, da insbesondere der enorme Werkstoffverschnitt beim Stanzen, der bei dem bekannten Verschaltungselement bis zu 80% beträgt, entfällt. Der Werkstoffverschnitt beschränkt sich nur noch auf das durch den Fertigungsprozess ggf. bedingte Zurechtstutzen der Drahtenden. Durch den weitgehenden Wegfall des Werkstoffabfalls schlagen auch die eingesparten Entsorgungskosten vorteilhaft zu Buche. Durch das Biegen von Drähten, die einen runden oder polygonalen (rechteckigen, quadratischen, sechskantigen usw.) Querschnitt haben können, werden die Stanzwerkzeuge durch preiswertere Biege- und Handlingswerkzeuge ersetzt. Betriebe, die keine eigene Stanzerei besitzen, können bei der Herstellung des erfindungsgemäßen Verschaltungselements auf den einfachen und kostengünstigen Drahtbiegungsprozess zurückgreifen, der mit nur geringen Investitionskosten durchgeführt werden kann, so dass die betriebliche Wertschöpfung gesteigert werden kann. mit teilweise radial und teilweise axial versetzten, koaxialen

Durch die in den weiteren Ansprüchen 2 - 9 aufgeführten Maßnahmen sind vorteilhafte Weiterbildung und Verbesserungen des im Anspruch 1 angegebenen Verschaltungselements möglich.

Gemäß einer vorteilhaften Ausführungsform der Erfindung ist der Träger als kreisrunder Kunststoffring mit teilweise seitlich geöffneten Rinnen zur Aufnahme der Drähte ausgebildet. Der kreisrunde Kunststoffring, dessen radiale Breite in etwa der radialen Stärke des Rückschlussrings des Stators des Motors entspricht, wird als Kunststoffspritzteil hergestellt, wobei aufgrund seiner schmalen Ringform gegenüber der Trägerplatte bei dem bekannten Verschaltungselement erneut Werkstoffkosten eingespart werden.

Ein Stator, bei dem das erfindungsgemäße Verschaltungselement eingesetzt ist, ist in den Ansprüchen 10 -13 angegeben.

### Zeichnung

Die Erfindung ist anhand eines in der Zeichnung dargestellten Ausführungsbeispiels in der nachfolgenden Beschreibung näher erläutert. Es zeigen jeweils in perspektivischer Darstellung:
- Fig. 1: eine Draufsicht eines Verschaltungselements für eine Wicklung im Stator eines bürstenlosen Kleinmotors in Zuordnung zu dem Stator,
- Fig. 2: das Verschaltungselement gemäß Fig. 1 in Explosionsdarstellung,
- Fig. 3: eine Unteransicht des Verschaltungselements in Fig. 1 in Explosionsdarstellung.

### Beschreibung des Ausführungsbeispiels

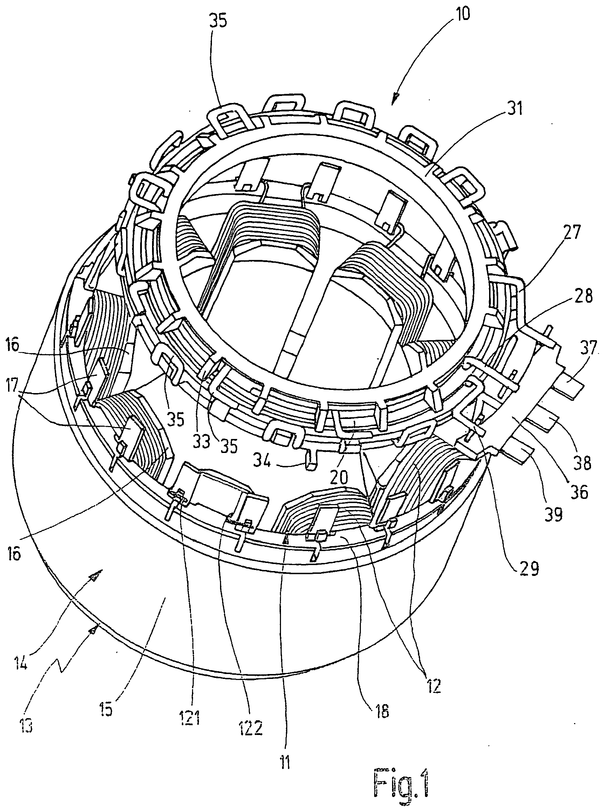

Das in Fig. 1 in Draufsicht perspektivisch dargestellte Verschaltungselement 10 ist für eine dreisträngige Wicklung 11 mit insgesamt neun Spulen 12 eines Stators 13 eines bürstenlosen Kleinmotors konzipiert, der ein elektronisch kommutierten Gleichstrommotor (EC-Motor) oder ein Synchronmotor sein kann. Der in Fig. 1 perspektivisch dargestellte Stator 13 besitzt einen Statorkörper 14, der in bekannter Weise einen hohlzylindrischen Rückschlußring 15 und im Ausführungsbeispiel insgesamt neun davon radial abstehende Statorzähne 16 umfaßt, die mit einem hier nicht dargestellten Rotor den Arbeitsluftspalt des Motors begrenzen. Auf jedem Statorzahn 16 ist eine ringförmige Spule 12 aufgewickelt, und die Spulenenden 121 und 122 einer jeden Spule 12 sind mit jeweils einem flachen Anschlußstift 17 verbunden. Die Anschlußstifte 17 sind in Umfangsrichtung gesehen äquidistant angeordnet und stehen von der Stirnseite des Rückschlußrings 15 axial vor, wobei sie gegenüber dem Rückschlußring 15 durch einen Isolierring 18 elektrisch isoliert sind.

Das Verschaltungselement 10 dient zum Herstellen von Schaltverbindungen zwischen den Spulen 12, wobei im beschriebenen Beispiel die Schaltverbindungen so ausgelegt sind, daß in jedem Wicklungsstrang oder in jeder Wicklungsphase der dreisträngigen oder dreiphasigen Wicklung 11 drei Spulen 12 parallelgeschaltet sind.

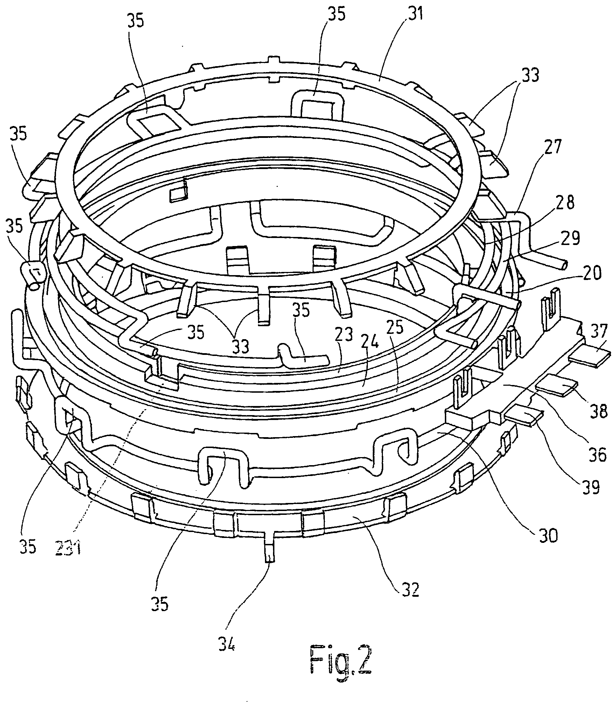

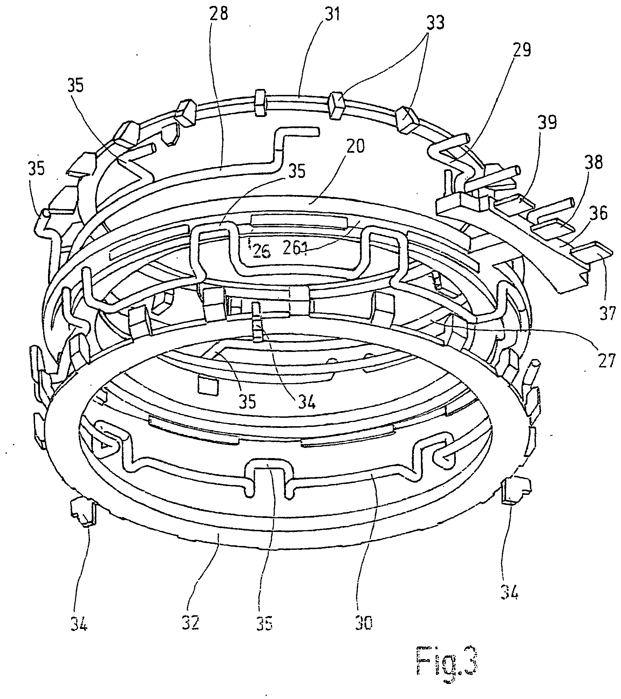

Das Verschaltungselement 10, das in Fig. 2 in Draufsicht und in Fig. 3 in Unteransicht jeweils in Explosionsdarstellung zu sehen ist, weist einen ringförmigen Träger 20 aus Kunststoff mit insgesamt vier koaxialen Rinnen 23 - 26 zur Aufnahme eines von insgesamt vier gebogenen Drähten 27 bis 30 auf, die zum Verschalten der Spulen 12 dienen. Zwei Rinnen 24 und 25 sind in einer Ebene des Trägers 20 radial versetzt, liegen also konzentrisch zueinander. Die obere Rinne 23 und die untere Rinne 26 sind gegenüber den Rinnen 24, 25 in der gemeinsamen mittleren Ebene des Trägers 20 axial versetzt und weisen in ihrer äußeren Ringwand Rinnenöffnungen 231 bzw. 261 auf. Die obere Rinne 23 ist zudem noch zu den Rinnen 24 und 25 radial nach innen versetzt. Die entsprechend gebogenen Drähte 27 bis 30 liegen in den Rinnen 23 bis 26 ein und sind darin mittels zweier auf den Träger 20 von oben und unten axial aufgesetzter, ringförmiger Abdeckelemente 31, 32 aus Kunststoff festgelegt. Das obere Abdeckelement 31 verschließt die obere Rinne 25 und überdeckt mit axial nach unten abstehenden und radial über das Abdeckelement 31 vorstehenden Schließkörpern 33 abschnittweise die beiden mittleren Rinnen 24, 25. Das untere Abdeckelement 32 schließt die untere Rinne 26 mit dem darin einliegenden Draht 30 ab und trägt nach unten vorstehende, am Umfang versetzt angeordnete Klemmstege 34, die bei auf die Stirnseite des Rückschlußrings 15 aufgesetztem Verschaltungselement 10 zwischen den bewickelten Statorzähnen 16 eintauchen und sich radial kraftschlüssig an die Innenwand des Rückschlußrings 15 anlegen. Beide Abdeckelemente 31, 32 sind fest mit dem Träger 20 verbunden, was beispielsweise durch Clipsen, Kleben oder UltraschallSchweißen vorgenommen werden kann.

Am Träger 20 ist ein aus Kunststoff gespritztes Klemmenbrett 36 angesetzt, das mit drei Anschlußklemmen 37, 38, 39 für jeweils einen Wicklungsstrang belegt ist. Die Drahtenden der Drähte 27 bis 29 werden mit den Anschlußklemmen 37 bis 39 durch Hot-Stacking elektrisch und mechanisch verbunden. Die Drähte 27 bis 30 weisen in ihrem Verlauf Ausbiegungen 35 auf, die zum Anschließen der Drähte 27 bis 30 an die Anschlußstifte 17 des Stators 13 dienen. Entsprechend der dreiphasigen oder dreisträngigen Wicklung 11 mit drei parallelen Spulen 12 pro Wicklungsstrang besitzen die Drähte 27 bis 29 jeweils drei Ausbiegungen 35 und der Draht 30 zur Erzeugung eines Sternpunkts der Wicklungsstränge insgesamt neun Ausbiegungen 35. Die Ausbiegungen 35 in den Drähten 28 und 29, die in den beiden mittleren Rinnen 24, 25 einliegen, sind über die Rinnenoberkanten der Rinnen 24, 25 radial zu den Anschlußstiften 17 geführt und die Ausbiegungen 35 in den Drähten 27 und 30, die in der oberen bzw. unteren Rinne 23 bzw. 26 einliegen, sind durch die Rinnenöffnungen 231 bzw. 261 seitlich herausgeführt und dann axial umgebogen, um die Ebene der Anschlußstifte 17 zu erreichen. Die elektrische Verbindung zwischen den Ausbiegungen 35 und den Anschlußstiften 17 erfolgt durch Verschweißen, Verlöten oder Schneidklemmen.

Der Träger 20 des Verschaltungselements 10 kann weitere Befestigungsmöglichkeiten für Anbauteile aufweisen. Die Klemmstege 34 dienen gleichzeitig der Zentrierung des Verschaltungselements 10 zum Stator 13. Zusätzlich können Fixierungen vorgesehen werden, die automatisch eine richtige Zuordnung der Ausbiegungen 35 zu den Spulenenden 121, 122 der Spule 12 beim Ansetzten des Verschaltungselements 10 an den Stator 13 herstellen.

Selbstverständlich ist das beschriebene Verschaltungselement nicht nur auf die Verschaltung einer dreisträngigen Wicklung mit neun Spulen beschränkt. Bei entsprechender Anpassung der Zahl der gebogenen Drähte und der Ausbiegungen in den Drähten zum Anschluß der Spulen kann jede Wicklung mit beliebiger Strang- und Spulenzahl verschaltet werden.

## Patentansprüche

1. Stator (13) für eine elektrische Maschine, insbesondere für einen bürstenlosen Kleinmotor, mit einem Statorkörper (14) und einer in diesem einliegenden, mehrsträngigen, aus Spulen (12) zusammengesetzten Wicklung (11), mit einem die Spulen (12) verbindenden Verschaltungselement (10), aufweisend einen Träger (20) aus Isoliermaterial und auf dem Träger (20) angeordneten elektrischen Leiterstreifen zum Herstellen von Schaltverbindungen zwischen den Spulen (12), **dadurch gekennzeichnet, dass** die elektrischen Leiterstreifen als gebogene Drähte (27 - 30) ausgeführt sind, wobei die Spulenenden der Spulen (12) jeweils mit einem flachen Anschlussstift (17) des Stators (13) verbunden sind, wobei die Drähte (27 - 30) in ihrem Verlauf Ausbiegungen (35) für das Anschließen der Spulenenden (121, 122) der Spulen (12) der Wicklung (11) aufweisen, wobei die Spulenenden (121, 122) der Spule (12) auf Anschlussstifte (17) gelegt sind, die an der Stirnseite des Statorkörpers (14) von diesem axial vorstehen, und die Anschlussstifte (17) mit den Ausbiegungen (35) in den Drähten (27 - 30) des Verschaltungselements (10) elektrisch leitend verschweißt oder verlötet sind.

2. Stator (13) nach Anspruch 1, **dadurch gekennzeichnet, dass** die Anschlussstifte (17) in Umfangsrichtung des Stators (13) gesehen äquidistant angeordnet sind und von der Stirnseite eines Rückschlussrings (15) des Stators (13) axial abstehen, wobei sie gegenüber dem Rückschlußring (15) durch einen Isolierring (18) elektrisch isoliert sind.

3. Stator (13) nach Anspruch 1, **dadurch gekennzeichnet, dass** die Festlegung der Drähte (27 - 30) in den Rinnen (23 - 26) mittels zweier ringförmiger Abdeckelemente (31, 32) aus Isoliermaterial vorgenommen ist, die auf die Ober- und Unterseite des Trägers (20) aufgesetzt und mit diesem fest verbunden sind.

4. Stator (13) nach Anspruch 3, **dadurch gekennzeichnet, dass** auf dem an der Unterseite des Trägers (20) angeordneten Abdeckelement (32) Befestigungsmittel zum räumlichen Festlegen in der Maschine vorgesehen sind.

5. Stator (13) nach Anspruch 3 oder 4, **dadurch gekennzeichnet, dass** eine obere Rinne (25) von dem oberen Abdeckelement (31) und eine untere Rinne (26) von dem unteren Abdeckelement (32) überdeckt ist und dass das obere Abdeckelement (31) in Umfangsrichtung versetzte, axial nach unten vorstehende Schließkörper (33) aufweist, die sich auf zwei zueinander radial versetzten, mittleren Rinnen (24, 25) auflegen.

6. Stator (13) nach einem der Ansprüche 1 - 5, **dadurch gekennzeichnet, dass** die Drähte (27 - 30) in konzentrischen Rinnen (23 - 26) aufgenommen sind, die teilweise radial und teilweise axial zueinander versetzt in dem Träger (20) ausgebildet sind.

7. Stator (13) nach Anspruch 6, **dadurch gekennzeichnet, dass** die Ausbiegungen (35) teilweise über die Rinnenoberkante und teilweise aus seitlichen Rinnenöffnungen (231, 261) radial aus den Rinnen (23 - 26) herausgeführt sind.

8. Stator (13) nach einem der Ansprüche 1 - 7, **dadurch gekennzeichnet, dass** am Träger (20) ein Klemmenbrett (36) mit Anschlussklemmen (37 - 39) angeordnet ist und dass jeweils ein Drahtende der Drähte (27 - 29) mit einer Anschlussklemme (37 - 39) verbunden ist.

9. Stator (13) nach einem der Ansprüche 2 - 8, **dadurch gekennzeichnet, dass** der Träger (20) als kreisrunder Kunststoffring ausgebildet ist, in dem die Rinnen (23 - 26) einstückig eingeformt sind.

10. Stator (13) nach Anspruch 1 bis 9, **dadurch gekennzeichnet, dass** das Verschaltungselement (10) an einer Stirnseite des Statorkörpers (14) angeordnet ist und dass die am Träger (20) ausgebildeten Befestigungsmittel von am Umfang des Trägers (20) versetzten Klemmstegen (34) gebildet sind, die radial kraftschlüssig an der Innenwand des Statorkörpers (14) anliegen.

11. Stator (13) nach Anspruch 1 bis 10, **dadurch gekennzeichnet, dass** die Spulen (12) als Ringspulen ausgebildet sind, die auf von einem Rückschlussring (15) des Statorkörpers (14) radial abstehenden Statorzähnen (16) aufgewickelt sind.

## Claims

1. Stator (13) for an electrical machine, in particular for a small brushless motor, comprising a stator body (14) and a polyphase winding (11) which is situated in the said stator body and is composed of coils (12), comprising an interconnection element (10) which connects the coils (12) and has a support (20), which is composed of insulating material, and electrical conductor strips, which are arranged on the support (20), for establishing switching connections between the coils (12), **characterized in that** the electrical conductor strips are designed as bent wires (27-30), wherein the coil ends of the coils (12) are each connected to a flat connection pin (17) of the stator (13), wherein the wires (27-30), in their course, have bent-out portions (35) for the connection of the coil ends (121, 122) of the coils (12) of the winding (11), wherein the coil ends (121, 122) of the coil (12) are placed on connection pins (17) which axially project from the stator body (14) on the end side of the said stator body, and the connection pins (17) are electrically conductively welded or soldered to the bent-out portions (35) in the wires (27-30) of the interconnection element (10).

2. Stator (13) according to Claim 1, **characterized in that** the connection pins (17) are arranged equidistantly as seen in the circumferential direction of the stator (13) and axially protrude from the end side of a magnetic return path ring (15) of the stator (13), wherein the said connection pins are electrically insulated from the magnetic return path ring (15) by an insulating ring (18).

3. Stator (13) according to Claim 1, **characterized in that** the wires (27-30) are fixed in the channels (23-26) by means of two annular covering elements (31, 32) which are composed of insulating material, are mounted on the top side and the bottom side of the support (20) and are fixedly connected to the said support.

4. Stator (13) according to Claim 3, **characterized in that** fastening means for spatial fixing in the machine are provided on the covering element (32) which is arranged on the bottom side of the support (20).

5. Stator (13) according to Claim 3 or 4, **characterized in that** an upper channel (25) is covered by the upper covering element (31), and a lower channel (26) is covered by the lower covering element (32), and **in that** the upper covering element (31) has closing bodies (33) which are offset in the circumferential direction, project axially downward and rest on two central channels (24, 25) which are radially offset in relation to one another.

6. Stator (13) according to one of Claims 1-5, **characterized in that** the wires (27-30) are accommodated in concentric channels (23-26) which are formed in a partially radially and partially axially offset manner in relation to one another in the support (20).

7. Stator (13) according to Claim 6, **characterized in that** the bent-out portions (35) are routed radially out of the channels (23-26) partially by means of the channel upper edge and partially out of lateral channel openings (231, 261).

8. Stator (13) according to one of Claims 1-7, **characterized in that** a terminal board (36) with connection terminals (37-39) is arranged on the support (20), and **in that** a wire end of the wires (27-29) is respectively connected to a connection terminal (37-39).

9. Stator (13) according to one of Claims 2-8, **characterized in that** the support (20) is in the form of a circular plastic ring in which the channels (23-26) are integrally formed.

10. Stator (13) according to Claims 1 to 9, **characterized in that** the interconnection element (10) is arranged on an end side of the stator body (14), and **in that** the fastening means, which are formed on the support (20), are formed by clamping webs (34) which are offset on the circumference of the support (20) and which bear against the inner wall of the stator body (14) in a radially non-positive manner.

11. Stator (13) according to Claims 1 to 10, **characterized in that** the coils (12) are in the form of annular coils which are wound onto stator teeth (16) which radially project from a magnetic return path ring (15) of the stator body (14).

## Revendications

1. Stator (13) destiné à une machine électrique, notamment destiné à un petit moteur sans balais, comprenant un corps de stator (14) et un enroulement (11) qui est introduit dans celui-ci, à plusieurs brins, et composé de bobines (12), comportant un élément de connexion (10) reliant les bobines (12), comprenant un support (20) constitué de matériau isolant et des bandes électriquement conductrices disposées sur le support (20) pour établir des liaisons de connexion entre les bobines (12), **caractérisé en ce que** les bandes électriquement conductrices sont réalisées sous la forme de fils coudés (27 - 30), dans lequel les extrémités de bobine des bobines (12) sont respectivement reliées à une broche de raccordement (17) du stator (13), dans lequel les fils (27 - 30) comprennent sur leur étendue des courbures (35) destinées au raccordement des extrémités de bobine (121, 122) des bobines (12) de l'enroulement (11), dans lequel les extrémités de bobine (121, 122) des bobines (12) sont placées sur des broches de connexion (17) qui font saillie axialement par rapport à celles-ci sur la face avant du corps de stator (14), et les broches de connexion (17) sont soudées ou brasées de manière électriquement conductrice aux courbures (35) des fils (27-30) de l'élément de connexion (10).

2. Stator (13) selon la revendication 1, **caractérisé en ce que** les broches de connexion (17) sont disposées de manière équidistante lorsqu'elles sont observées dans la direction circonférentielle du stator (13) et sont axialement espacées de la face avant d'une bague de reflux (15) du stator (13), dans lequel celles-ci sont électriquement isolées par rapport à la bague de reflux (15) par une bague isolante (18).

3. Stator (13) selon la revendication 1, **caractérisé en ce que** la mise en place des fils (27 - 30) dans les rainures (23 - 26) est effectuée au moyen de deux éléments de recouvrement (31, 32) annulaires en matériau isolant qui sont placés sur les faces supérieure et inférieure du support (20) et sont fermement reliés à celui-ci.

4. Stator (13) selon la revendication 3, **caractérisé en ce qu'**il est prévu dans la machine des moyens de fixation destinés à l'immobilisation spatiale sur l'élément de recouvrement (32) disposé sur la face inférieure du support (20).

5. Stator (13) selon la revendication 3 ou 4, **caractérisé en ce qu'**une rainure supérieure (25) est recouverte par l'élément de recouvrement supérieur (31) et **en ce qu'**une rainure inférieure (26) est recouverte par l'élément de recouvrement inférieur (32) et **en ce que** l'élément de recouvrement supérieur (31) présente des corps de fermeture (33) décalés dans la direction circonférentielle et dépassant axialement vers le bas, qui reposent sur deux rainures (24, 25) médianes décalées radialement l'une par rapport à l'autre.

6. Stator (13) selon l'une quelconque des revendications 1 - 5, **caractérisé en ce que** les fils (27 - 30) sont reçus dans des rainures (23 - 26) concentriques qui sont réalisées de manière à ce qu'elles soient partiellement décalées radialement et partiellement décalées axialement dans le support (20).

7. Stator (13) selon la revendication 6, **caractérisé en ce que** les courbures (35) sont partiellement amenées à sortir, en passant en partie sur les arêtes des rainures, et en partie hors des rainures (23 - 26) radialement par des ouvertures de rainure latérales (231, 261).

8. Stator (13) selon l'une quelconque des revendications 1 - 7, **caractérisé en ce qu'**un bornier (36) comportant des bornes de raccordement (37 - 39) est disposé sur le support (20) et **en ce qu'**une extrémité des fils (27 - 29) est respectivement reliée à une borne de raccordement (37 - 39).

9. Stator (13) selon l'une quelconque des revendications 2 - 8, **caractérisé en ce que** le support (20) est formé d'un seul tenant sous la forme d'une bague en matière plastique annulaire dans laquelle les rainures (23 - 26) sont formées d'un seul tenant.

10. Stator (13) selon les revendications 1 à 9, **caractérisé en ce que** l'élément de connexion (10) est disposé sur une face avant du corps de stator (14) et **en ce que** les moyens de fixation réalisés sur le support (20) sont formés par des pattes de serrage (34) décalées sur la circonférence de support (20), qui reposent radialement par complémentarité de force sur la paroi interne du corps de stator (14).

11. Stator (13) selon les revendications 1 à 10, **caractérisé en ce que** les bobines (12) sont réalisées sous la forme de bobines annulaires qui sont enroulées sur des dents de stator (16) radialement espacées d'une bague de reflux (15) du corps de stator (14).
